# EUROPEAN PATENT APPLICATION

(11) **EP 3 758 387 A1**
(43) Date of publication of application: **30.12.2020**
(21) Application number: 20180849.0
(22) Date of filing: 18.06.2020
(51) Int. Cl.: H04N 21/4788, H04N 21/258, G06Q 50/00, H04N 7/14, H04N 21/414, H04L 12/58

(54) **MOBILE, SERVER AND OPERATING METHOD THEREOF FOR MATCHING USER PROFILES**

(30) Priority: 27.06.2019 KR 20190076797
(71) Applicant: Hyperconnect, Inc., Seoul 06164 (KR)
(72) Inventor: AHN, Sangil, Cheongju-si Chungcheongbuk-do (KR)
(74) Representative: Gulde & Partner

(57) **Abstract**

The operating method of a mobile according to the embodiments of the present disclosure may include receiving, from a server, a first profile group, from among a plurality of profile information, transmitted from a plurality of mobiles to the server; creating and transmitting a first favorability signal for at least one profile information included in the first profile group; determining which mobile transmitted a second favorability signal to the mobile, from among the plurality of mobiles; and performing communication between the mobile and the plurality of mobiles, in response to a result of transmitting the first favorability signal and a result of receiving the second favorability signal.

## Description

### 1. Field

Disclosed embodiments relate to a mobile and server that can be matched to each other more effectively, and an operating method thereof.

### 2. Background

With the development of communication technology and miniaturization of electronic devices, personal mobiles are being widely used by general consumers. In particular, portable personal mobiles such as smart phones or smart tablets have been widely used in recent years. Most of the mobiles comprise communication functions. Using these mobiles, users can search on the Internet or send and receive messages with other users.

In addition, with the development of small camera technology, small microphone technology, small display technology, and small speaker technology, most mobiles such as smartphones comprise cameras, microphones, displays and speakers. With these mobiles, users can record a voice, or record a video containing a voice. Users can check the recorded voice through the speaker included in the mobile or check the recorded video through the display.

The display included in a user's mobile may simultaneously display a video currently being recorded by the user's mobile and a video currently being recorded by another user's mobile. In addition, the speaker included in the user's mobile may simultaneously reproduce a voice currently being recorded by another user's mobile. In other words, the user and the other user can have a video call with each other using their respective mobiles.

### SUMMARY

According to the disclosed embodiments, a mobile, a server, and a method for operating the same can be provided, that can more effectively match a plurality of mobiles with each other.

Further, according to the embodiments, a mobile, a server and a method for operating the same can be provided, that can intermediate so that a suitable user, from among users of a plurality of mobiles, can be matched to a user of another mobile.

Further, according to the embodiments, a mobile, a server and a method for operating the same can be provided, in which a user of each of the plurality of mobiles can expand human relationship through the intermediary service.

An operating method of a server intermediating between a plurality of mobiles according to an embodiment of the present disclosure may include receiving a plurality of profile information from the plurality of mobiles; transmitting a first profile group comprising at least one of the plurality of profile information to a first mobile from among the plurality of mobiles; transmitting a second profile group comprising at least one of the plurality of profile information to a second mobile that is different from the first mobile, from among the plurality of mobiles; receiving a first signal being generated by a user of the first mobile based on a first profile information, corresponding to a user of the second mobile, included in the first profile group; receiving a second signal being generated by the user of the second mobile based on a second profile information, corresponding to the user of the first mobile, included in the second profile group; and determining a type of communication permitted between the first mobile and the second mobile based on the first signal and the second signal.

In some embodiments, the determining may determine that one-to-one communication can be performed between the first mobile and the second mobile, in response to the first signal being a favorability signal for the first profile information, and the second signal being a favorability signal for the second profile information.

In some embodiments, the one-to-one communication may include at least one of a video call, chatting and messaging.

In some embodiments, the determining may determine that a random video call can be performed for a predetermined period of time between the first mobile and the second mobile, in response to the first signal being a favorability signal for the first profile information, or the second signal being a favorability signal for the second profile information.

In some embodiments, the determining may determine not to perform communication between the first mobile and the second mobile, in response to the first signal not being a favorability signal for the first profile information, and the second signal not being a favorability signal for the second profile information.

In some embodiments, the first profile information may include at least one of a photograph, hobby information, nickname information, height information, date of birth information, gender information, residential area information, and school information of the user of the second mobile, and at least one first video recorded by the user of the second mobile.

In some embodiments, the second profile information may include at least one of a photograph, hobby information, nickname information, height information, date of birth information, gender information, residential area information, and school information of the user of the first mobile, and at least one second video recorded by the user of the first mobile.

In some embodiments, the operating method of the server may further include transmitting the at least one first video to the first mobile, in response to a request to view the at least one first video being received from the first mobile; and transmitting the at least one second video to the second mobile, in response to a request to view the at least one second video being received from the second mobile.

In some embodiments, the operating method of the server may further include transmitting a third profile group comprising at least one of the plurality of profile information to a third mobile that is different from the first mobile and the second mobile, from among the plurality of mobiles; receiving a third signal being generated by the user of the first mobile based on a third profile information, corresponding to a user of the third mobile, included in the first profile group; receiving a fourth signal being generated by the user of the third mobile based on the first profile information, corresponding to the user of the first mobile, included in the third profile group; and determining a type of communication permitted between the first mobile and the third mobile based on the third signal and the fourth signal.

A server according to an embodiment of the present disclosure may include a communication interface for receiving a plurality of profile information from a plurality of mobiles; a processor for creating a first profile group and a second profile group, comprising at least one of the plurality of profile information; and a memory for storing the plurality of profile information, wherein the communication interface may transmit the first profile group to a first mobile from among the plurality of mobiles, and the second profile group to a second mobile, that is different from the first mobile, from among the plurality of mobiles, and receive a first signal being generated by a user of the first mobile based on a first profile information, corresponding to a user of the second mobile, included in the first profile group, and a second signal being generated by a user of the second mobile based on a second profile information, corresponding to the first mobile, included in the second profile group, and the processor may determine a type of communication permitted between the first mobile and the second mobile based on the first signal and the second signal.

An operating method of a mobile according to an embodiment of the present disclosure may include receiving, from a server, a first profile group, from among a plurality of profile information, transmitted from a plurality of mobiles to the server; creating and transmitting a first favorability signal for at least one profile information included in the first profile group; determining which mobile transmitted a second favorability signal to the mobile, from among the plurality of mobiles; and performing communication between the mobile and the plurality of mobiles, in response to a result of transmitting the first favorability signal and a result of receiving the second favorability signal.

In some embodiments, the performing communication may perform a random video call with the mobile that received the first favorability signal and the mobiles that transmitted the second favorability signal for a predetermined period of time.

In some embodiments, the performing communication may perform one-to-one communication with the mobile that transmitted the second favorability signal from among the mobiles that received the first favorability signal.

In some embodiments, the operating method of the mobile may further include not performing communication with mobiles that did not transmit the second favorability signal from among the mobiles that did not receive the first favorability signal.

According to the disclosed embodiments, a mobile, a server, and a method for operating the same can be provided, that can more effectively match a plurality of mobiles.

Further, according to the embodiments, a mobile, a server and a method for operating the same can be provided, that can intermediate so that a suitable user, from among users of a plurality of mobiles, can be matched to a user of another mobile.

Further, according to the embodiments, a mobile, a server and a method for operating the same can be provided, in which a user of each of the plurality of mobiles can expand human relationship through an intermediary service.

### BRIEF DESCRIPTION OF THE DRAWINGS

FIG. 1 is a system configuration diagram illustrating an environment where an electronic device operates according to an embodiment of the present disclosure;
FIG. 2 is a block diagram illustrating a configuration of a mobile according to an embodiment of the present disclosure;
FIG. 3 is a block diagram illustrating a configuration of a server according to an embodiment of the present disclosure;
FIG. 4 is a diagram illustrating a communication method of a plurality of mobiles and a server according to an embodiment of the present disclosure;
FIG. 5 is a view illustrating a method in which profile information received from a server is displayed on a mobile according to an embodiment of the present disclosure;
FIG. 6 is a view illustrating a method in which profile information received from a server is displayed on a mobile according to another embodiment of the present disclosure;
FIG. 7 is a view illustrating a screen displayed on the mobile when the user of the mobile is matched with a counterpart.
FIG. 8 is a view illustrating a method in which profile information is displayed on a mobile according to another embodiment of the present disclosure;
FIG. 9 is a flowchart illustrating a communication method of a mobile according to an embodiment of the present disclosure;
FIG. 10 is a view illustrating a live match preparation screen displayed on a mobile according to an embodiment of the present disclosure;
FIG. 11 is a view illustrating a live match screen displayed on a mobile according to an embodiment of the present disclosure;
FIG. 12 is a view illustrating a message screen displayed on a mobile according to an embodiment of the present disclosure; and
FIG. 13 is a flowchart illustrating a method in which a server matches a plurality of mobiles according to an embodiment of the present disclosure.

### DETAILED DESCRIPTION

The advantages and characteristics of the present disclosure, and the method for achieving those advantages and characteristics will be clarified with reference to the embodiments that will be described hereinafter together with the drawings attached hereto. However, the present disclosure is not limited to the embodiments disclosed hereinafter, but may be implemented in various different forms, and the present embodiments are provided merely for the purpose of complete disclosure of the present disclosure, and for the purpose of informing a person skilled in the art of the complete scope of the present disclosure, and the present disclosure is to be defined only by the scope of the claims. Like reference numerals indicate like components throughout the entirety of the specification.

Even though "a first" or "a second" and the like are used to describe various components, these components are not limited by the aforementioned terms. The aforementioned terms can only be used to differentiate one component from other components. Therefore, a first component mentioned hereinafter may be a second component within the technical idea of the present disclosure.

The terms used in the present specification were used to describe the embodiments, and not to limit the present disclosure. In the present specification, a singular form includes plural forms unless specially mentioned otherwise. "Comprises" or "comprising" used in the present specification imply that the mentioned component or step does not exclude the presence or addition of one or more other component or step.

Unless defined otherwise, all the terms used in the present specification may be construed to mean what may be commonly understood by a person skilled in the art. Further, the terms defined in generally used dictionaries should not be construed ideally or overly unless clearly defined specially.

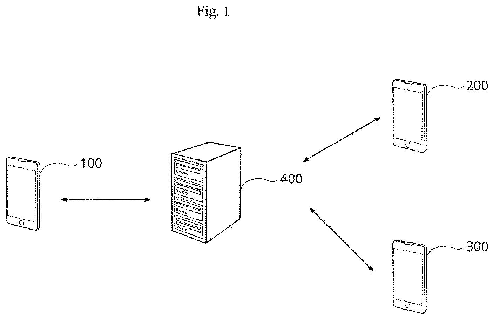

FIG. 1 is a system configuration diagram illustrating an environment where an electronic device operates according to an embodiment of the present disclosure. According to FIG. 1, a system environment where a plurality of electronic devices 100∼300 operate may include a server 400 and the plurality of electronic devices 100∼300. For example, the environment where the plurality of electronic devices 100∼300 operate may include at least one server.

Each of the plurality of electronic devices 100∼300 may be connected by medium of the server 400. For convenience of describing the present disclosure, three electronic devices are illustrated in FIG. 1. However, the number of electronic devices is not limited to three. Each of the plurality of electronic devices 100∼300 may be embodied as one of a desktop computer, laptop computer, smart phone, smart phone tablet, smart watch, mobile terminal, digital camera, wearable device, or portable electronic device. Each of the plurality of electronic devices 100∼300 may implement a program or application.

Each of the plurality of electronic devices 100∼300 may be connected to a communication network. Each of the plurality of electronic devices 100∼300 may be interconnected through the communication network, or may be connected to the server 400. Each of the plurality of electronic devices 100∼300 may output data or receive data to or from another device interconnected thereto.

The communication network connected to each of the plurality of electronic devices 100∼300 may include a wired communication network, wireless communication network, or composite communication network. The communication network may include a mobile communication network such as 3G, LTE, or LTE-A, etc. The communication network may include a wired or wireless communication network such as Wi-Fi, UMTS/GPRS, or Ethernet, etc. The communication network may include a local area communication network such as Magnetic Secure Transmission (MST), Radio Frequency IDentification (RFID), Near Field Communication (NFC), ZigBee, Z-Wave, Bluetooth, Bluetooth Low Energy (BLE), or InfraRed communication (IR), etc. The communication network may include Local Area Network (LAN), Metropolitan Area Network (MAN), or Wide Area Network (WAN), etc.

Various forms of communication sessions may be established between the plurality of electronic devices 100∼300. For example, the plurality of electronic devices 100∼300 may exchange messages, files, audio data, images, or videos with each other. For example, the plurality of electronic devices 100∼300 may establish a video call session with each other using Transmission Control Protocol (TCP), User Datagram Protocol (UDP), or Web Real-Time Communication (WebRTC), etc.

The communication session may be established directly between at least two electronic devices of the plurality of electronic devices 100∼300. According to another embodiment, the video call session may be established between at least two electronic devices of the plurality of electronic devices 100∼300 via at least one other device. For example, the communication session may include a session established between the first electronic device 100 and the server 400, and a session established between the server 400 and the second electronic device 200.

The server 400 may connect the plurality of electronic devices 100∼300 so that they can perform communication with each other. For example, the server 400 may provide a video call service so that the plurality of electronic devices 100∼300 can establish the video call session. The server 400 may receive a mediation request from each of the plurality of electronic devices 100∼300. In response to the mediation request, the server 400 may intermediate the plurality of electronic devices 100∼300.

Hereinbelow, for convenience of describing the present disclosure, an electronic device and a mobile may be used to have the same meaning.

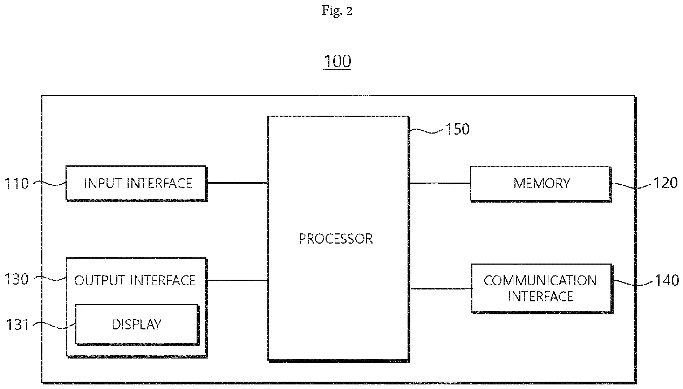

FIG. 2 is a block diagram illustrating a configuration of a mobile according to an embodiment of the present disclosure. Referring to FIG. 2, the first mobile 100 may include an input interface 110, a memory 120, an output interface 130, a communication interface 140, and a processor 150. The second mobile 200 and the third mobile 300 illustrated in FIG. 1 may each be implemented similarly or identically as the first mobile 100.

The input interface 110 may receive signals from outside. The input interface 110 may receive the signals from a user of the mobile 100. Further, the input interface 110 may receive the signals from an external device. The input interface 110 may include, for example, a microphone, camera, keyboard, mouse, trackball, touchscreen, button, switch, sensor, network interface, or other input devices, etc. The input interface 110 may receive voices from outside through the microphone included in the input interface 110.

Further, the input interface 110 may receive images recorded from the camera (not illustrated) included in the input interface 110, or receive gestures from the user of the mobile 100. Otherwise, the touchscreen, for example, included in the input interface 110 may receive touch inputs from the user of the mobile 100. Otherwise, from the microphone (not illustrated) included in the input interface 110, the voice of the user of the mobile 100 or surrounding sounds of the mobile 100 may be received.

The input interface 110 may receive profile information or user inputs received from the user of the mobile 100. For example, the profile information of the user may include at least one of photographs, hobby information, gender information, country information, or age information of the user of the mobile 100. In addition, the profile information of the user may further include videos recorded by the user. In addition, the user input may be a touch input received from the user of the mobile 100.

The memory 120 may store data. The memory 120 may store the voice data, image data or profile information of the user received from the input interface 110. In addition, the memory 120 may store results of computation performed by the processor 150. For example, the memory 120 may store a voice encoded by the processor 150. The memory 120 may store the data to be output externally through the communication interface 140, or store the data received from outside through the communication interface 140.

The memory 120 may store a software or program. For example, the memory 120 may store programs and various types of data such as an application, and Application Programming Interface (API), etc. The memory 120 may store instructions that are executable by the processor 150.

The memory 120 may include at least one of a volatile memory or nonvolatile memory. The memory 120 may include at least one of, for example, flash memory, Read Only Memory (ROM), Random Access Memory (RAM), Electrically Erasable ROM (EEROM), Erasable Programmable ROM (EPROM), Electrically Erasable Programmable ROM (EEPROM), Hard Disk Drive (HDD), or register. The memory 120 may include, for example, a file system, database, or embedded database, etc.

The output interface 130 may include a display 131. For example, the display 131 may include a flat panel display device such as Liquid Crystal Display (LCD), Organic Light Emitting Diode (OLED), or Plasma Display Panel (PDP), etc. The display 131 may include a curved-surface display or a flexible display. The display 131 may include a touchscreen. In a case where the display 131 includes a touchscreen, the display 131 may operate as the input interface 110 at the same time as performing the output operations.

The display 131 may display data. Further, the display 131 may display a result of computation performed by the processor 150. Further, the display 131 may display data stored in the memory 120.

The display 131 may display the data received by the communication interface 140. In some embodiments, the display 131 may output a profile group received from the server 400. More specifically, the profile group may correspond to a plurality of profile information, and the display 131 may sequentially output the plurality of profile information. In some embodiments, the plurality of profile information may each be information provided from some mobiles from among the plurality of mobiles 200∼300.

The display 131 may receive a certain input from the user regarding each of the plurality of profile information being sequentially displayed. For example, the certain input may be an input expressing favorability towards a user of the mobile corresponding to each of the plurality of profile information. Further, the certain input may be an input of passing in order to view other profile information without expressing favorability towards the profile information being displayed.

The output interface 130 may output sound. The output interface 130 may output the sound received through the input interface 110 or the sound received through an external device. For example, the output interface 130 may include a speaker (not illustrated).

The communication interface 140 may output data to outside of the mobile 100 or receive data from the outside of the mobile 100. The communication interface 140 may output the data to the server 400 or to an external device. The communication interface 140 may receive the data from the server 400 or from the external device. The communication interface 140 may output the result of computation performed by the processor 150, to the outside.

The communication interface 140 may output a signal generated based on a certain input that is being input from the user of the mobile 100, to the server 400, based on the plurality of profile information being output sequentially.

In some embodiments, in response to an input expressing favorability towards a user of the mobile corresponding to each of the plurality of profile information being received in the display 141, the communication interface 140 may output a favorability signal. Further, in response to an input of passing to view other profile information without expressing favorability towards the profile information displayed being received in the display 141, the communication interface 140 may output a pass signal.

Further, the communication interface 140 may output the profile information of the user stored in the memory 120, to the server 400.

The communication interface 140 may include, for example, a remote network interface such as 3G module, LTE module, LTE-A module, Wi-Fi module, WiGig module, Ultra Wide Band (UWB) module, or LAN card, etc. Further, the communication interface 140 may include a local area network interface such as MST module, Bluetooth module, NFC module, RFID module, ZigBee module, Z-Wave module, or infrared ray module, etc. Further, the communication interface 140 may include other network interfaces.

The processor 150 or each of the components included in the processor 150 may be embodied in the form of software or hardware. For example, the software may be embodied as program execution instructions such as mechanical codes, firmware codes, embedded codes, and applications, etc. The hardware may be an electric electronic circuit, processor, computer, pressure sensor, inertia sensor, MicroElectroMechanical System (MEMS), passive elements, or a combination thereof.

The processor 150 may control operations of the mobile 100. The processor 150 may be interconnected with each of the components included in the mobile 100, and may control the operations of each of the components included in the mobile 100. The processor 150 may control the operations of the mobile 100 in response to the signal received by the input interface 110.

In some embodiments, the processor 150 may detect a certain input received through the input interface 110. For example, the certain input may be an input being generated by the user of the first mobile 100 based on the plurality of profile information. The processor 150 may generate the favorability signal or pass signal based on the certain input.

In some embodiments, in response to an input expressing favorability towards the user of the mobile corresponding to each of the plurality of profile information being received in the display 141, the processor 150 may generate the favorability signal. Further, in response to an input of passing to view other profile information without expressing favorability towards the profile information displayed being received in the display 131, the processor 150 may generate the pass signal.

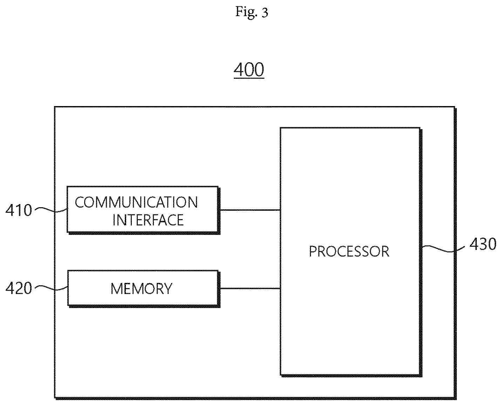

FIG. 3 is a block diagram illustrating a configuration of the server according to an embodiment of the present disclosure. Referring to FIGs. 1 and 3, the server 400 may include a communication interface 410, memory 420, and processor 430.

The communication interface 410 may output data to outside of the server 400, or receive data from the outside of the server 400. The communication interface 410 may output the data to the plurality of mobiles 100∼300, and receive the data from the plurality of mobiles 100∼300. The communication interface 410 may output the result of computation performed by the processor 430, to the outside. Further, the communication interface 410 may output the data stored in the memory 420, to the outside.

The communication interface 410 may receive a plurality of profile information from the plurality of mobiles 100∼300. The data to be output by the communication interface 410, or the data received by the communication interface 410 may be stored in the memory 420.

The communication interface 410 may include, for example, a remote network interface such as 3G module, LTE module, LTE-A module, Wi-Fi module, WiGig module, Ultra Wide Band (UWB) module, or LAN card, etc. Further, the communication interface 410 may include a local area network interface such as MST module, Bluetooth module, NFC module, RFID module, ZigBee module, Z-Wave module, or infrared ray module, etc. Further, the communication interface 410 may include other network interfaces.

The memory 420 may store programs and various types of data such as an application and application programming interface (API), etc. The memory 420 may store instructions that are executable by the processor 430. For example, the application may be an application that can provide various forms of communication services to the plurality of mobiles 100∼300.

The memory 420 may store the information received through the communication interface 410. For example, the memory 420 may store profile information of the user of each of the plurality of mobiles 100∼300.

The memory 420 may include at least one of a volatile memory or nonvolatile memory. The memory 420 may include at least one of, for example, flash memory, ROM, EEROM, EPROM, EEPROM, Hard Disk Drive or register. The memory 420 may include, for example, a file system, database, or embedded database, etc.

The processor 430 or each of the components included in the processor 430 may be embodied in the form of software or hardware. For example, the software may be embodied as program execution instructions such as mechanical codes, firmware codes, embedded codes, and applications, etc. The hardware may be an electric electronic circuit, processor, computer, pressure sensor, inertia sensor, MEMS, passive elements, or a combination thereof.

The processor 430 may execute the instructions and application stored in the memory 420. For example, the processor 430 may transmit at least one profile information to each of the plurality of mobiles 100∼300. The processor 430 may receive a favorability signal or defer sign regarding the at least one profile information received from each of the plurality of mobiles 100∼300.

The processor 430 may match two mobiles that transmitted a favorability sign towards the profile information of each other, so that the two mobiles can perform one-to-one communication. Further, after a certain period of time, the processor 430 may provide a live match service between some mobiles of the plurality of mobiles 100∼300 for a predetermined period of time. In some embodiments, some mobiles may include at least one mobile that received a favorability sign from the first mobile 100 and at least one mobile that transmitted a favorability sign to the first mobile 100. Some mobiles may perform a random video chatting through the live match.

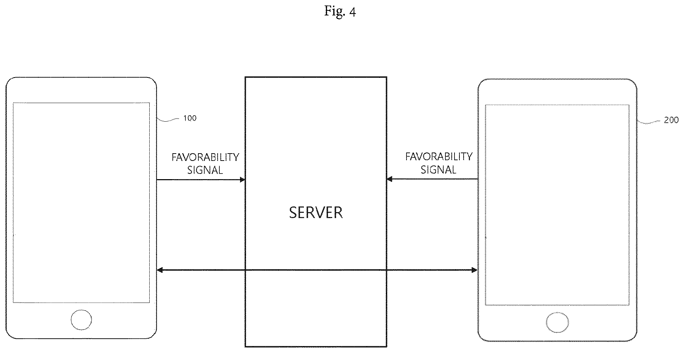

Detailed operation method of the plurality of mobiles 100∼300 and the server 400 may be described with reference to FIGs. 4 to 13.

FIG. 4 is a view illustrating a communication method of the plurality of mobiles and the server according to an embodiment of the present disclosure.

Referring to FIGs. 1 to 4, the first mobile 100 may generate a favorability signal based on the profile information received from the server 400. The generated favorability signal may be transmitted to the server 400. For example, the profile information that the first mobile 100 received from the server 400 may be an input from the user of the second mobile 200.

The second mobile 200 may generate a favorability signal based on the profile information received from the server 400. The generated favorability signal may be transmitted to the server 400. For example, the profile information that the second mobile 200 received from the server 400 may be an input from the user of the first mobile 100.

Since the first mobile 100 and the second mobile 200 generated the favorability signals towards the profile information of each other, the first mobile 100 and the second mobile 200 can be matched. The matched first mobile 100 and the second mobile 200 may perform one-to-one communication through at least one method of video call, chatting and messaging.

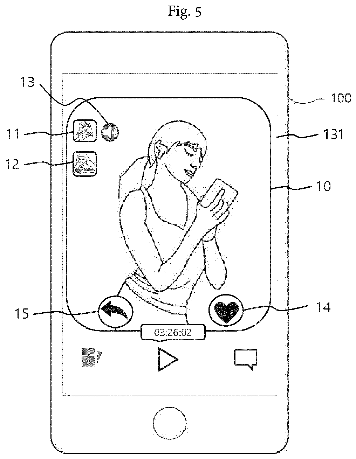

FIG. 5 is a view illustrating a method in which the profile information received from the server is displayed on the mobile according to an embodiment of the present disclosure.

Referring to FIGs. 1, 2 and 5, the first mobile 100 may display the profile group received from the server 400. More specifically, the first mobile 100 may sequentially display the plurality of profile information included in the received profile group.

Referring to FIG. 5, in a partial region of the display 131 of the first mobile 100, the first profile information of the plurality of profile information may be displayed. The first profile information may be provided from one of the plurality of mobiles 100∼300 excluding the first mobile 100. For example, an assumption can be made that the first profile information is provided from the second mobile 200.

In some embodiments, the first profile information may include at least one profile. On the entirety of the partial region 10 where the first profile information is displayed, the first profile may be displayed. The first profile may correspond to the user of the second mobile 200. The first profile information may further include a second profile 11 and a third profile 12, besides the first profile. The second profile 11 and the third profile 12 may be displayed smaller than the first profile. In response to an input of touching one of the second profile 11 and the third profile 12 being received, the touched profile may be displayed to correspond to the entirety of the partial region 10.

In some embodiments, the second profile 11 may be a video recorded by the user of the second mobile 200. In response to the second profile being a video, a sound icon 13 may be displayed next to the second profile. In response to an input of touching the second profile 11 being received, the video may be reproduced on the entirety of the partial region 10. In response to an input of touching the sound icon 13 being received, the sound of the video may be turned on or off.

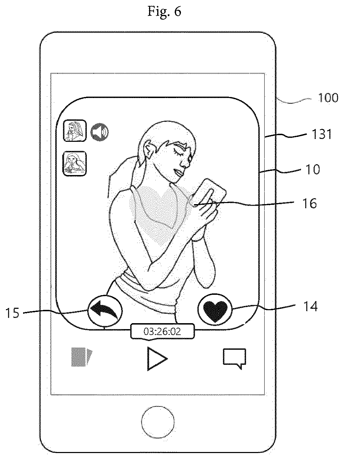

In some embodiments, in the partial region 10 of the display 131, a favorability icon 14 and pass icon 15 may be displayed. The favorability icon 14 and pass icon 15 may be displayed on regions of the display 131 excluding the partial region 10. The favorability icon 14 and pass icon 15 may be described in detail with reference to FIG. 6.

FIG. 6 is a view illustrating a method for displaying the profile information received from the server, on the mobile, according to another embodiment of the present disclosure.

Referring to FIGs. 5 and 6, the user of the first mobile 100 may select one of the favorability icon 14 and the pass icon 15 based on the first profile information. If the user of the first mobile 100 wants to perform one-to-one communication with the user who provided the first profile information, the user may select the favorability icon 14.

In response to an input of touching the favorability icon 14 being received in the first mobile 100, a heart image 16 may be displayed in a partial region 10 of the display 131. Further, in response to an input of touching the favorability icon 14 being received in the first mobile 100, a favorability signal may be generated, and the generated favorability signal may be transmitted to the server 400. The user of the first mobile 100 may perform one-to-one communication with the user who provided the first profile information through at least one method of a video call, chatting and messaging.

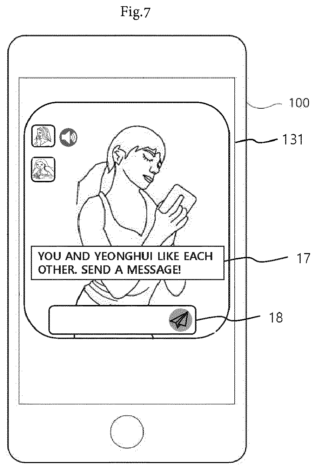

FIG. 7 is a view illustrating a screen displayed on the mobile when the user of the mobile is matched with a counterpart.

Referring to FIGs. 5 to 7, the server 400 may receive a favorability signal from the mobile that provided the first profile information. For example, the mobile that provided the first profile information may be the second mobile 200. The user of the second mobile 200 may generate the favorability signal based on the second profile information input from the user of the first mobile 100.

In some embodiments, since the user of the first mobile 100 and the user of the second mobile 200 generated favorability signals based on the profile information of each other, the server 400 may match the first mobile 100 and the second mobile 200.

The first mobile 100 may receive a match message 17 from the server 400. The received match message 17 may be displayed through the display 131. In some embodiments, the match message 17 may be received from the server 400.

When matched by the server 400, the first mobile 100 and the second mobile 200 may transmit messages to each other. On the display 131 of the first mobile 100, a message window 18 may be displayed. The user of the first mobile 100 may input a message in the message window 18 to transmit to the second mobile 200. In some embodiments, when matched by the server 400, the first mobile 100 and the second mobile 200 may perform a video call with each other.

In some embodiments, the first mobile 100 and the second mobile 200 may transmit messages to each other through the server 400. In another embodiment, the first mobile 100 and the second mobile 200 may transmit messages directly.

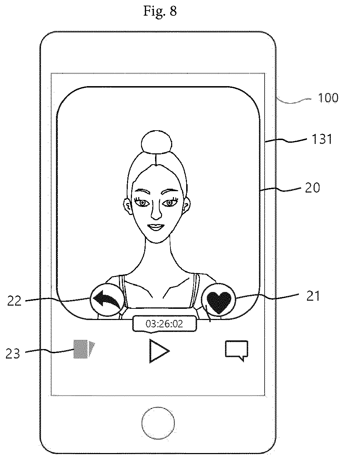

FIG. 8 is a view illustrating a method for displaying the profile information on the mobile according to another embodiment of the present disclosure.

Referring to FIGs. 5 and 8, the user of the first mobile 100 may select one of the favorability icon 14 and pass icon 15 based on the first profile information. If the user of the first mobile 100 does not want to perform one-to-one communication with the user who provided the first profile information, the user may select the pass icon 15.

In response to an input of touching the pass icon 14 being received in the first mobile 100, second profile information, instead of the first profile information, may be displayed in a partial region 20 of the display 131. The second profile information may be provided from one of the plurality of mobiles 100∼300 excluding the first mobile 100. For example, an assumption can be made that the second profile information is provided from the third mobile 300. The second profile information may include at least one of a photograph or video recorded from the user of the third mobile 300.

In some embodiments, in the partial region 20 of the display 131, a favorability icon 21 and pass icon 22 may be displayed. The favorability icon 21 and the pass icon 22 may be displayed in the region of the display 131 excluding the partial region 20.

In some embodiments, on the display 131 of the first mobile 100, a discover icon 23 may be displayed. In response to an input of the user of the first mobile 100 touching the discover icon 23 being received, on the display 131 of the first mobile 100, a plurality of profile information may be sequentially output. Further, an input of touching the favorability icon 14, 21 or the pass icon 15, 22 by the first mobile regarding each of the plurality of profile information will be received in the first mobile 100.

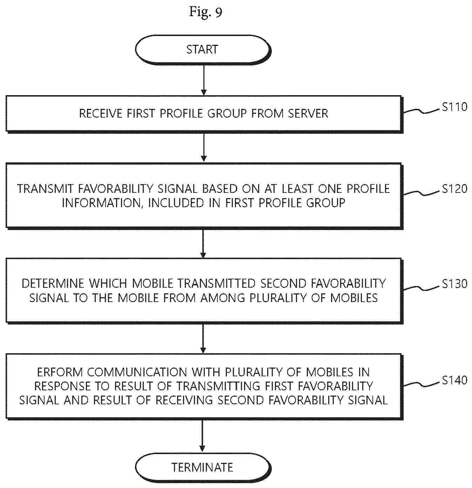

FIG. 9 is a flowchart illustrating a communication method of a mobile according to an embodiment of the present disclosure.

Referring to FIGs 5 to 9, at step S110, the first mobile 100 may receive a first profile group from the server 400. In some embodiments, the first profile group may include profile information that the server 400 received from some mobiles excluding the first mobile 100 of the plurality of mobiles 100∼300.

At step S120, the first mobile 100 may generate a first favorability signal based on at least one profile information included in the first profile group. More specifically, the user of the first mobile 100 may touch the favorability icon 14, 21 regarding at least one profile information that the user wishes to perform one-to-one communication with from among each of the profile information included in the first profile group. In response to an input of touching the favorability icon 14, 21 being received in the first mobile 100, the first mobile 100 may generate a first favorability signal and transmit the generated first favorability signal to the server 400.

At step S130, a second favorability signal may be received from the plurality of mobiles 100∼300. More specifically, some mobiles of the plurality of mobiles 100∼300 may generate the second favorability signal regarding the profile information input by the user of the first mobile 100. The favorability signal generated by each of these mobiles may be transmitted to the server 400. The first mobile 100 may receive the second favorability signal generated by each of these mobiles, from the server 400.

At step S140, the first mobile 100 may perform communication with the plurality of mobiles 100∼300 in response to a result of transmitting the first favorability signal and a result of receiving the second favorability signal.

In some embodiments, the first mobile 100 may perform a random video call for a predetermined period of time with the mobile that received the first favorability signal and the mobiles that transmitted the second favorability signal.

In another embodiment, the first mobile 100 may perform one-to-one communication with the mobile that transmitted the second favorability signal from among the mobiles that received the first favorability signal.

In another embodiment, the first mobile 100 may not perform communication with the terminal that did not transmit the second favorability signal from among the mobiles that did not receive the first favorability signal.

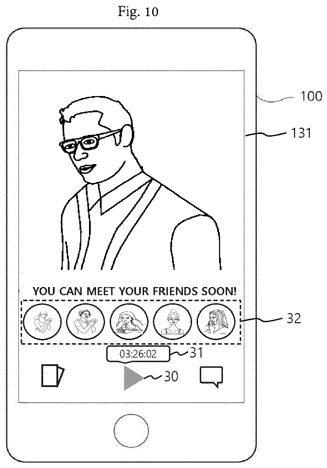

FIG. 10 I a view illustrating a live match preparation screen displayed on a mobile according to an embodiment of the present disclosure.

Referring to FIG. 10, a live match icon 30 may be displayed on the display 131 of the first mobile 100. In some embodiments, after a certain period of time, if the user of the first mobile 100 touches the live match icon 30 for a predetermined period of time, the user may start a live match. The live match may mean the user of the first mobile 100 performing one-to-one video chatting with the users of at least one mobile that received a favorability signal from the first mobile or the users of at least one mobile that transmitted a favorability signal to the first mobile.

The live match icon 30 may be displayed together with a countdown icon 31. In some embodiments, the countdown icon 31 may display the time that is left until a certain time point when the user of the first mobile 100 can start the live match.

In some embodiments, in response to an input of touching the live match icon 30 being received in the first mobile 100 before the certain time point arrives, a live match candidate profile 32 may be displayed on the display 131 of the first mobile 100. In some embodiments, on the live match candidate profile 32, profiles of the users of at least one mobile that received the favorability signal from the first mobile 100, or of the users of at least one mobile that transmitted the favorability signal to the first mobile 100, may be displayed.

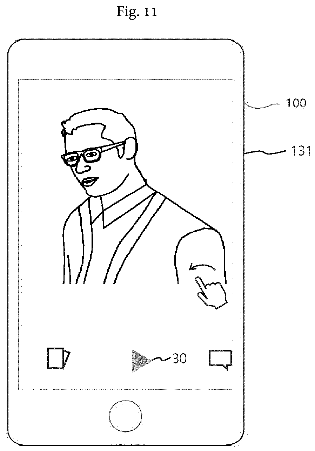

FIG. 11 is a view illustrating a live match screen displayed on a mobile according to an embodiment of the present disclosure.

Referring to FIGs. 10 and 11, in response to an input of touching the live match icon 30 for a predetermined period of time after a certain time point being received in the first mobile 100, the user of the first mobile 100 may start a live match.

The user of the first mobile 100 may touch the display 131 with a finger, and then perform a swipe motion. The swipe motion may be the user touching the display with a finger, and then moving the finger to a certain direction. The certain direction is not limited to one direction, and may be defined to have various meanings such as the left-right direction, up-down direction, or diagonal direction, etc.

In response to the swipe motion being input into the mobile 100, the user of the first mobile 100 may be matched with the user of a certain mobile. For example, the user of the certain mobile may be one of the users of at least one mobile that received the favorability signal from the first mobile 100 or of the users of at least one mobile that transmitted the favorability signal to the first mobile 100.

In some embodiments, if the user of the first mobile 100 wishes to be matched with a user of another mobile, the user of the first mobile 100 may touch the display 131 with a finger, and then perform the swipe motion. In response to the swipe motion being input into the mobile 100, the user of the first mobile 100 may be matched with the user of the other mobile.

In some embodiments, the live match counterpart of the user of the first mobile 100 may be randomly selected by the server 400. Otherwise, the live match counterpart of the user of the first mobile 100 may be randomly selected by the processor 150 of the first mobile 100.

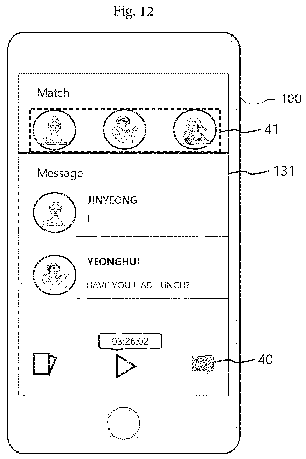

FIG. 12 is a view illustrating a message screen displayed on a mobile according to an embodiment of the present disclosure.

Referring to FIG. 12, in response to an input of touching a message icon 40 being received in the first mobile 100, the user of the first mobile 100 may start with the matched users.

On the display 131 of the first mobile 100, the profile 41 of the users of the mobiles matched with the first mobile 100 may be displayed. The user of the first mobile 100 may perform one-to-one communication that includes at least one of a video call, chatting and messaging with the users of the matched mobiles.

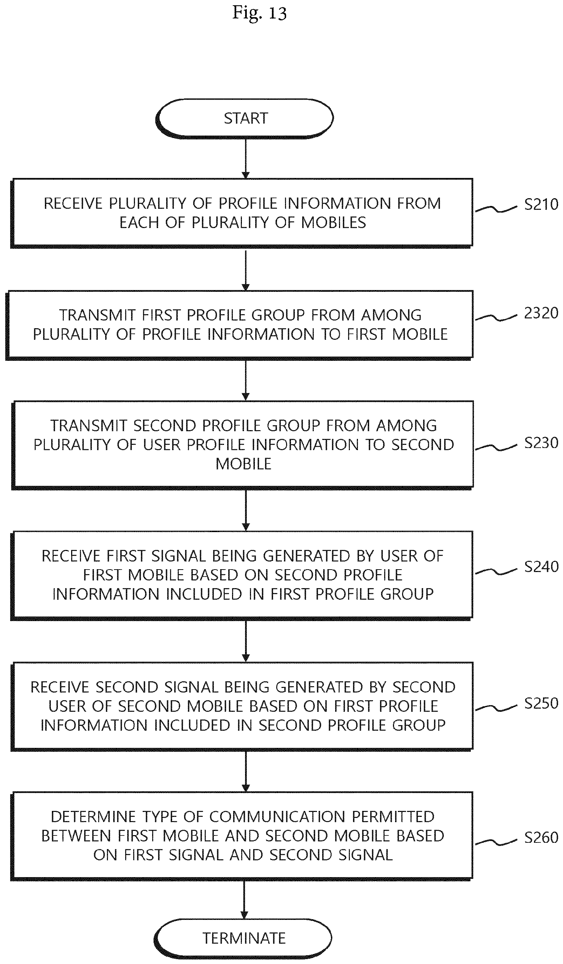

FIG. 13 is a flowchart illustrating a method in which the server matches a plurality of mobiles according to an embodiment of the present disclosure.

Referring to FIGs. 1 to 13, at step S210, the server 400 may receive a plurality of profile information from the plurality of mobiles 100∼300. The server 400 may store the plurality of profile information in the memory 420. Each of the plurality of profile information may include at least one of a photograph, profile information and video input by the users of the plurality of mobiles 100∼300.

At step S220, the server 400 may transmit a first profile group from among the plurality of profile information to the first mobile 100. The first profile group may include some profile information excluding the first profile information provided from the first mobile 100 from among the plurality of profile information.

At step S230, the server 400 may transmit a second profile group from among the plurality of profile information to the second mobile 200. The second profile group may include some profile information excluding the second profile information provided from the second mobile 200 from among the plurality of profile information.

At step S240, the server 400 may receive a first signal being generated by the user of the first mobile 100 based on the first profile information included in the first profile group from the first mobile 100. In some embodiments, the first profile information may be information that the second mobile 200 provided to the server 400.

At step S250, the server 400 may receive a second signal being generated by the user of the second mobile 200 based on the second profile information included in the second profile group from the second mobile 200. In some embodiments, the second profile information may be information that the first mobile 100 provided to the server 400.

At step S260, the server 400 may determine a type of communication permitted between the first mobile 100 and the second mobile 200 based on the first signal and the second signal.

In some embodiments, in response to the first signal and the second signal being favorability signals, the server 400 may determine that the first mobile 100 and the second mobile 200 can perform one-to-one communication.

In another embodiment, in response to at least one of the first signal and the second signal being a pass signal, the server 400 may not permit one-to-one communication between the first mobile 100 and the second mobile 200.

In another embodiment, in response to at least one of the first signal and the second signal being a favorability signal, at a certain time point, the server 400 may include the user of the first mobile 100 and the user of the second mobile 200 in the live match candidate group of each of the first mobile 100 and the second mobile 200.

In another embodiment, in response to both the first signal and the second signal being a pass signal, the server 400 may determine not to permit communication between the first mobile 100 and the second mobile 200.

Referring to FIGs. 1 to 13, the plurality of mobiles 100∼300 and the server 400 according to an embodiment of the present disclosure may be matched to each other more effectively. Further, the server 400 may intermediate so that a suitable user from among the users of the plurality of mobiles 100∼300 can be matched to a user of another mobile. Further, the server 400 may intermediate so that each user of the plurality of mobiles 100∼300 can expand human relationship through the intermediary service.

The embodiments described above may be embodied in the form of recording media that include instructions executable by a computer, such as program modules that can be executed by a computer. Computer readable media may be any available media that can be accessed by a computer, and may include both volatile and nonvolatile media, and removable and nonremovable media.

Further, the computer readable media may include computer storage media or communication media. The computer storage media may include both volatile and nonvolatile, and removable and nonremovable media embodied in any method or technology for the storage of information such as computer readable instructions, data structures, program modules or other data, etc. The communication media typically include computer readable instructions, data structures, program modules, or other data of modulated data signals such as carrier waves, or other output mechanisms, and may include any information delivery media.

The embodiments of the present disclosure were described above with reference to the drawings attached, but those skilled in the art that the present disclosure pertains to will understand that the present disclosure can be implemented in other specific forms without modifying the technical spirit or essential features of the present disclosure. Therefore, it should be understood that the above-described embodiments are illustrative in all respects and not restrictive.

## Claims

1. An operating method of a server intermediating between a plurality of mobiles, the method comprising:
receiving a plurality of profile information from the plurality of mobiles;
transmitting a first profile group comprising at least one of the plurality of profile information to a first mobile from among the plurality of mobiles;
transmitting a second profile group comprising at least one of the plurality of profile information to a second mobile that is different from the first mobile, from among the plurality of mobiles;
receiving a first signal being generated by a user of the first mobile based on a first profile information, corresponding to a user of the second mobile, included in the first profile group;
receiving a second signal being generated by the user of the second mobile based on a second profile information, corresponding to the user of the first mobile, included in the second profile group; and
determining a type of communication permitted between the first mobile and the second mobile based on the first signal and the second signal.

2. The operating method of the server, according to claim 1,
wherein the determining determines that one-to-one communication can be performed between the first mobile and the second mobile, in response to the first signal being a favorability signal towards the first profile information, and the second signal being a favorability signal towards the second profile information.

3. The operating method of the server, according to claim 1,
wherein the one-to-one communication comprises at least one of a video call, chatting and messaging.

4. The operating method of the server, according to claim 1,
wherein the determining determines that a random video call can be performed for a predetermined period of time between the first mobile and the second mobile, in response to the first signal being a favorability signal towards the first profile information, or the second signal being a favorability signal towards the second profile information.

5. The operating method of the server, according to claim 1,
wherein the determining determines not to perform communication between the first mobile and the second mobile, in response to the first signal not being a favorability signal towards the first profile information, and the second signal not being a favorability signal towards the second profile information.

6. The operating method of the server, according to claim 1,
wherein the first profile information comprises at least one of a photograph, hobby information, nickname information, height information, date of birth information, gender information, residential area information, and school information of the user of the second mobile, and at least one first video recorded by the user of the second mobile.

7. The operating method of the server, according to claim 6,
wherein the second profile information comprises at least one of a photograph, hobby information, nickname information, height information, date of birth information, gender information, residential area information, and school information of the user of the first mobile, and at least one second video recorded by the user of the first mobile.

8. The operating method of the server, according to claim 7,
further comprising transmitting the at least one first video to the first mobile, in response to a request to view the at least one first video being received from the first mobile; and
transmitting the at least one second video to the second mobile, in response to a request to view the at least one second video being received from the second mobile.

9. The operating method of the server, according to claim 1,
further comprising transmitting a third profile group comprising at least one of the plurality of profile information to a third mobile that is different from the first mobile and the second mobile, from among the plurality of mobiles;
receiving a third signal being generated by the user of the first mobile based on a third profile information, corresponding to a user of the third mobile, included in the first profile group;
receiving a fourth signal being generated by the user of the third mobile based on the first profile information, corresponding to the user of the first mobile, included in the third profile group; and
determining a type of communication permitted between the first mobile and the third mobile based on the third signal and the fourth signal.

10. A computer readable recording medium where a program for performing the method according to any one of claims 1 to 9 is recorded.

11. A server comprising a communication interface for receiving a plurality of profile information from a plurality of mobiles;
a processor for creating a first profile group and a second profile group, comprising at least one of the plurality of profile information; and
a memory for storing the plurality of profile information,
wherein the communication interface transmits the first profile group to a first mobile from among the plurality of mobiles, and the second profile group to a second mobile, that is different from the first mobile, from among the plurality of mobiles, and receives a first signal being generated by a user of the first mobile based on a first profile information, corresponding to a user of the second mobile, included in the first profile group, and a second signal being generated by a user of the second mobile based on a second profile information, corresponding to the first mobile, included in the second profile group, and
the processor determines a type of communication permitted between the first mobile and the second mobile based on the first signal and the second signal.

12. An operating method of a mobile, the method comprising:
receiving, from a server, a first profile group, from among a plurality of profile information, transmitted from a plurality of mobiles to the server;
creating and transmitting a first favorability signal for at least one profile information included in the first profile group;
determining which mobile transmitted a second favorability signal to the mobile, from among the plurality of mobiles; and
performing communication between the mobile and the plurality of mobiles, in response to a result of transmitting the first favorability signal and a result of receiving the second favorability signal.

13. The operating method of the mobile, according to claim 12,
wherein the performing communication performs a random video call with the mobile that received the first favorability signal and the mobiles that transmitted the second favorability signal for a predetermined period of time.

14. The operating method of the mobile, according to claim 12,
wherein the performing communication performs one-to-one communication with the mobile that transmitted the second favorability signal from among the mobiles that received the first favorability signal.

15. The operating method of the mobile, according to claim 12,
further comprising not performing communication with mobiles that did not transmit the second favorability signal from among the mobiles that did not receive the first favorability signal.
